# EUROPEAN PATENT SPECIFICATION

(11) **EP 3 617 263 B1**
(45) Date of publication and mention of the grant of the patent: **13.11.2024**
(21) Application number: 18790593.0
(22) Date of filing: 11.04.2018
(51) Int. Cl.: C08L 21/00, B60C 1/00, C08K 5/01, C08L 101/00

(54) **RUBBER COMPOSITION**
KAUTSCHUKZUSAMMENSETZUNG
COMPOSITION DE CAOUTCHOUC

(30) Priority: 25.04.2017 JP 2017086534
(43) Date of publication of application: 04.03.2020
(73) Proprietor: Sumitomo Rubber Industries, Ltd., Kobe-shi, Hyogo 651-0072 (JP)
(72) Inventor: MIYAZAKI, Tatsuya, Kobe-shi Hyogo 651-0072 (JP)
(74) Representative: Manitz Finsterwald Patent- und Rechtsanwaltspartnerschaft mbB
(86) International application number: PCT/JP2018/015253
(87) International publication number: WO 2018/198775

(56) References cited:
- WO-A1-2017/077712
- JP-A- 2004 307 798
- JP-A- 2004 307 798
- JP-A- 2006 045 578
- JP-A- 2011 122 112
- JP-A- 2013 185 048
- JP-A- 2016 204 413
- JP-A- 2017 101 159
- JP-A- H01 230 648
- JP-A- H11 199 711
- JP-A- H11 199 711
- US-B1- 8 779 025

## Description

### TECHNICAL FIELD

The present invention relates to a rubber composition.

### BACKGROUND OF THE INVENTION

A rubber composition can be compounded of adhesive and crosslinkable resins. In this case, a mold releasability of the rubber composition from a Banbury mixer, an extruder, especially a mold (hereinafter, these are referred to as a mold and the like) tends to be deteriorated at the time of preparation thereof. Therefore, various commercially available mold releasing agents (for example, WB16 available from Struktol GmbH), a paraffin wax, oleamide, calcium stearate, fatty acid metal salt, stearic acid and the like are compounded in a rubber composition (Patent Document 1).
Patent Document 2 discloses a rubber composition comprising a diene-based rubber (SBR and BR) as component (X), a higher fatty acid ester as component (A), a microwax having 40 to 50 carbon atoms as component (B) and a paraffin wax having 30 or more and less than 40 carbon atoms as a component (C).
Patent Document 3 discloses a powder for powder molding obtained by dry-blending of a thermoplastic and a thermosetting resin fine powder.

### PRIOR ART DOCUMENT

### Patent Document

Patent Document 1: JP 2013-082884 A
Patent Document 2: JP H11 199 711 A
Patent Document 3: JP 2004 307 798 A

### SUMMARY OF THE INVENTION

### PROBLEM TO BE SOLVED BY THE INVENTION

The rubber composition described in Patent Document 1 comprises a wax comprising mainly a linear component (paraffin wax) as a compounding agent for ozone crack resistance. Such a wax is apt to form a hard film on a surface of a rubber. Therefore, if a compounding amount of the wax is large, in an obtained tire, the film is not scraped off sufficiently at an initial stage of running or at running-in operation. Thus, followability of a tire to micro unevenness of a road surface is not good and initial wet grip performance is apt to be deteriorated. Further, when a tire is released from a mold and is stored in a warehouse especially in a summertime, there is a case where a white thin film is generated on a surface of the tire and the tire looks whitish (whitening).

The present invention was made to solve the problem as mentioned above. An object of the present invention is to provide a rubber composition having good releasability from a mold or the like, being capable of improving initial wet grip performance and assuring that a rubber surface is hardly subject to whitening even after being allowed to stand in a high temperature and high humidity environment in a summertime.

### MEANS TO SOLVE THE PROBLEM

The present invention for solving the above-mentioned problem includes a configuration mentioned below.

(1) A rubber composition for an external layer of a tire comprising a rubber component and 0.5 to 2.0 parts by mass of a branched alkane having 40 to 70 carbon atoms, 1.2 parts by mass or less and not less than 0.05 part by mass of a linear alkane having 45 or more carbon atoms and 0.1 to 100 parts by mass of a hydrocarbon resin having a weight-average molecular weight of 300 to 15,000 based on 100 parts by mass of the rubber component, and further comprising 1.2 parts by mass or less and not less than 0.05 part by mass of a linear alkane having 20 to 32 carbon atoms based on 100 parts by mass of the rubber component.

### EFFECTS OF THE INVENTION

According to the present invention, a rubber composition having good releasability from a mold or the like, being capable of improving initial wet grip performance and assuring that a rubber surface is hardly subject to whitening even after being allowed to stand at a room temperature can be provided.

### EMBODIMENT FOR CARRYING OUT THE INVENTION

### <Rubber composition>

The rubber composition according to one embodiment of the present invention comprises a rubber component and 0.5 to 2.0 parts by mass of a branched alkane having 40 to 70 carbon atoms, 1.2 parts by mass or less and not less than 0.05 part by mass of a linear alkane having 45 or more carbon atoms, 0.1 to 100 parts by mass of a hydrocarbon resin having a weight-average molecular weight of 300 to 15,000 based on 100 parts by mass of the rubber component, and further comprising 1.2 parts by mass or less and not less than 0.05 part by mass of a linear alkane having 20 to 32 carbon atoms based on 100 parts by mass of the rubber component. The respective components will be described below.

### (Rubber components)

The rubber components are not limited particularly. It is preferable that the rubber composition comprises, for example, a diene rubber. The diene rubber is not limited particularly. Examples of the diene rubber include natural rubber (NR), isoprene rubber (IR), butadiene rubber (BR), styrene-butadiene rubber (SBR), styrene-isoprene rubber (SIR), styrene-isoprene-butadiene rubber (SIBR), ethylene-propylene-diene rubber (EPDM), chloroprene rubber (CR), acrylonitrile-butadiene rubber (NBR), butyl rubber (IIR) and the like. The diene rubbers may be used in combination. Among these, it is preferable that the diene rubbers include SBR and BR from a point that grip performance and abrasion resistance can be obtained in good balance, and it is more preferable that the rubber composition comprises SBR as the diene rubber from a point that more excellent grip performance can be obtained.

### SBR

SBR is not limited particularly. Examples of the SBR include an emulsion-polymerized styrene-butadiene rubber (E-SBR), a solution-polymerized styrene-butadiene rubber (S-SBR) and the like. Further, the SBR may be an end-modified S-SBR (modified S-SBR) or E-SBR (modified E-SBR). Examples of the modified S-SBR include a modified S-SBR modified with an organosilicon compound having an alkoxy group and the like. Further, the SBR may be oil-extended.

A styrene content of the SBR is not limited particularly, and is, for example, preferably not less than 5% by mass, more preferably not less than 8% by mass, further preferably not less than 15% by mass. Further, the styrene content is preferably not more than 60% by mass, more preferably not more than 55% by mass, further preferably not more than 45% by mass. When the styrene content of the SBR is within the above-mentioned range, enough grip performance and abrasion resistance of the rubber composition can be obtained easily. It is noted that in this embodiment, the styrene content of the SBR can be calculated in accordance with ¹H-NMR measurement.

A vinyl content of the SBR is not limited particularly, and is, for example, preferably not less than 5 mol%, more preferably not less than 8 mol%, further preferably not less than 10 mol%. Further, the vinyl content is preferably not more than 50 mol%, more preferably not more than 45 mol%, further preferably not more than 40 mol%. When the vinyl content of the SBR is within the above-mentioned range, enough grip performance and abrasion resistance of the rubber composition can be obtained easily. It is noted that in this embodiment, the vinyl content of the SBR (1,2-bond butadiene unit) can be determined by an infrared absorption spectrum analysis method.

A glass transition temperature (Tg) of the SBR is not limited particularly, and is, for example, preferably -60°C or higher, more preferably -50°C or higher. Further, the Tg is preferably 10°C or lower, more preferably 0°C or lower. When the Tg is within the above-mentioned range, the obtained rubber composition shows good grip performance, breaking properties and abrasion resistance. It is noted that in this embodiment, the Tg is a value obtained by removing an extended oil using acetone in conformity of JIS K 6229 and measuring a pure SBR content by differential scanning calorimetry measurement (DSC) in accordance with JIS K 7121.

A weight-average molecular weight (Mw) of the SBR is preferably not less than 700,000, more preferably not less than 750,000, further preferably not less than 800,000. Further, the Mw of the SBR is preferably not more than 1,500,000, more preferably not more than 1,400,000, further preferably not more than 1,300,000. When the Mw is within the above-mentioned range, the obtained rubber composition is excellent in breaking properties and abrasion resistance. It is noted that in this embodiment, the Mw (and a number-average molecular weight (Mn) described hereinafter) can be calibrated with standard polystyrene based on measurement values determined with gel permeation chromatography (GPC).

A number-average molecular weight (Mn) of the SBR is preferably not less than 200,000, preferably not less than 300,000, more preferably not less than 400,000. Further, the Mn of the SBR is preferably not more than 1,000,000, preferably not more than 900,000, more preferably not more than 800,000. When the Mn is within the above-mentioned range, the obtained rubber composition is excellent in breaking properties and abrasion resistance.

A ratio of Mw to Mn (Mw/Mn) of the SBR is not particularly limited. The ratio (Mw/Mn) is, for example, preferably 1.2 or more, more preferably 1.5 or more. Further, the ratio (Mw/Mn) is preferably 5 or less, more preferably 4 or less. When the ratio (Mw/Mn) is within the above-mentioned range, processability and heat build-up characteristic of the rubber composition can be improved.

When the rubber component comprise the SBR, an SBR content is not particularly limited. The SBR content in the rubber composition is, for example, preferably not less than 10% by mass, more preferably not less than 15% by mass, further preferably not less than 20% by mass. Further, the SBR content in the rubber composition is preferably not more than 90% by mass, more preferably not more than 80% by mass, further preferably not more than 70% by mass. When the SBR content is within the above-mentioned range, enough heat resistance and grip performance are apt to be obtained. When two or more kinds of SBR are used in combination, a total amount of the SBRs show the SBR content.

### BR

The BR is not particularly limited. Examples of the BR include a high cis-1,4-polybutadiene rubber (high-cis BR), a butadiene rubber comprising 1,2-syndiotactic polybutadiene crystals (SPB-containing BR), a modified butadiene rubber (modified BR), a rare-earth-based BR and the like. These BRs may be used in combination.

The high-cis BR is a butadiene rubber in which the content of cis-1,4 bond is not less than 90 mol%.

An example of an SPB-containing BR is not one in which 1,2-syndiotactic polybutadiene crystals (SPB) are simply dispersed in the BR, but one in which 1,2-syndiotactic polybutadiene crystals are chemically bonded with the BR and dispersed therein from the viewpoint of good crack growth resistance.

A melting point of the 1,2-syndiotactic polybutadiene crystal is preferably 180°C or higher, more preferably 190°C or higher. Further, the melting point of the 1,2-syndiotactic polybutadiene crystal is preferably 220°C or lower, more preferably 210°C or lower. When the melting point is within the above-mentioned range, a hardness of the crystal in a tire becomes adequate, and dispersion in the rubber composition is excellent.

A content of a boiling n-hexane insoluble matter in the SBR-containing BR is preferably not less than 2.5% by mass, more preferably not less than 8% by mass. Further, the content of the boiling n-hexane insoluble matter is preferably not more than 22% by mass, more preferably not more than 20% by mass, further preferably not more than 18% by mass. When the content of the boiling n-hexane insoluble matter is within the above-mentioned range, the obtained rubber composition has enough hardness, and dispersion of the BR and fillers becomes satisfactory. It is noted that in this embodiment, the boiling n-hexane insoluble matter is the 1,2-syndiotactic polybutadiene crystal in the SBR-containing BR.

A content of the 1,2-syndiotactic polybutadiene crystal in the SBR-containing BR is preferably not less than 2.5% by mass, more preferably not less than 10% by mass. Further, the content of the 1,2-syndiotactic polybutadiene crystal in the BR is preferably not more than 20% by mass, more preferably not more than 18% by mass. When the content is within the above-mentioned range, the obtained rubber composition has enough hardness, and dispersion of the BR becomes satisfactory.

The modified BR obtained by performing polymerization of 1,3-butadiene with a lithium initiator and then adding a tin compound, and further having the terminal molecules bonded with a tin-carbon bond is preferable.

Examples of the lithium initiator include lithium compounds such as alkyllithium, aryllithium, vinyllithium, organotin lithium compounds and organonitrogen lithium compounds, lithium metal and the like. By using the lithium initiator as the initiator for a modified BR, a modified BR having a high vinyl content and a low cis content can be produced.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, p-tributyltin styrene and the like, and these tin compounds may be used in combination.

The content of tin atoms in the modified BR is preferably not less than 50 ppm, more preferably not less than 60 ppm. Further, the content of tin atoms is preferably not more than 3,000 ppm, more preferably not more than 2,500 ppm, further preferably not more than 250 ppm. When the content of tin atoms is within the above-mentioned range, the dispersion of carbon black in the modified BR is accelerated easily, and extrusion processability is more excellent.

The molecular weight distribution (Mw/Mn) of the modified BR is preferably not more than 2, more preferably not more than 1.5. When the Mw/Mn of the modified BR is within the above-mentioned range, fillers are dispersed satisfactorily. It is noted that in this embodiment, the Mw and Mn are values calculated with polystyrene standards using a gel permeation chromatograph (GPC).

The vinyl bond amount of the modified BR is preferably not less than 5 mol%, more preferably not less than 7 mol%. Further, the vinyl bond amount of the modified BR is preferably not more than 50 mol%, more preferably not more than 20 mol%. When the vinyl bond amount of the modified BR is within the above-mentioned range, the modified BR is prepared easily, and fillers are easily dispersed.

The rare-earth-based BR is a butadiene rubber synthesized with a rare earth element-containing catalyst. The rare-earth-based BR has a high cis content and a low vinyl content. The rare-earth-based BR is not limited particularly, and ones generally used in the production of tires may be used.

The rare earth element-containing catalyst used for the synthesis of the rare-earth-based BR is not limited particularly, and examples thereof include catalysts which comprise a lanthanoid-based rare earth element-containing compound, an organoaluminum compound, an aluminoxane, or a halogen-containing compound, and optionally comprise a Lewis base. The rare earth element-containing catalysts may be used in combination. Among them, neodymium (Nd)-based catalysts using a neodymium (Nd)-containing compound as a lanthanoid-based rare earth element compound are preferable.

A Mooney viscosity ML₁₊₄ (100°C) of the rare-earth-based BR is not limited particularly. The Mooney viscosity ML₁₊₄ (100°C) is, for example, preferably not less than 35, more preferably not less than 40. Further, the Mooney viscosity ML₁₊₄ (100°C) is preferably not more than 55, more preferably not more than 50. When the Mooney viscosity ML₁₊₄ (100°C) is within the above-mentioned range, the unvulcanized rubber composition shows a proper viscosity, and a proper thickness after vulcanization is apt to be ensured. It is noted that in this embodiment, the Mooney viscosity is measured in accordance with ISO289 or JIS K6300.

A glass transition temperature (Tg) of the rare-earth-based BR is not limited particularly, and is, for example, preferably -130°C or higher, more preferably -120°C or higher. Further, the Tg is preferably -70°C or lower, more preferably -80°C or lower. When the Tg is within the above-mentioned range, the obtained rubber composition has good abrasion resistance and crack growth resistance.

A weight-average molecular weight (Mw) of the rare-earth-based BR is preferably not less than 300,000, more preferably not less than 320,000. Further, the Mw is preferably not more than 1,500,000, more preferably not more than 1,300,000. Moreover, the number-average molecular weight (Mn) of the rare-earth-based BR is preferably not less than 100,000, more preferably not less than 150,000. Further, the Mn is preferably not more than 1,000,000, more preferably not more than 800,000. When the Mw and Mn are within the above-mentioned range, the obtained rubber composition has good processability, and heat build-up characteristic and elongation at break can be improved.

The ratio of the Mw to the Mn (Mw/Mn) of the rare-earth-based BR is not limited particularly, and is, for example, preferably not less than 1.2, more preferably not less than 1.5. Further, the ratio (Mw/Mn) is preferably not more than 5, more preferably not more than 4. When the ratio (Mw/Mn) is within the above-mentioned range, processability and heat build-up characteristic of the rubber composition can be improved.

The content of cis-1,4 bond of the rare-earth-based BR is preferably not less than 90% by mass, more preferably not less than 93% by mass, further preferably not less than 95% by mass. When the content of cis-1,4 bond is within the above-mentioned range, the obtained rubber composition has good elongation at break and abrasion resistance.

The vinyl content of the rare-earth-based BR is preferably not more than 1.8% by mass, more preferably not more than 1.0% by mass, further preferably not more than 0.5% by mass. When the vinyl content of the rare-earth-based BR is within the above-mentioned range, the obtained rubber composition is excellent in elongation at break and abrasion resistance. It is noted that in this embodiment, the vinyl content (1,2-bond butadiene unit quantity) and the cis-1,4 bond content can be measured by infrared absorption spectrum analysis.

Among these various BRs, it is preferable that the rubber composition according to this embodiment comprises a rare-earth-based BR from the viewpoint of excellent abrasion resistance and heat build-up characteristic, and it is more preferable that the rubber composition comprises a rare-earth-based BR synthesized using an Nd-based catalyst.

When the rubber component comprises the BR, the content thereof is not limited particularly, and is, for example, preferably not less than 5% by mass, more preferably not less than 10% by mass, further preferably not less than 15% by mass in the rubber composition. Further, the content of the BR is preferably not more than 80% by mass, more preferably not more than 70% by mass, further preferably not more than 60% by mass in the rubber composition. When the content of the BR is within the above-mentioned range, the obtained rubber composition is excellent in abrasion resistance, crack growth resistance and grip performance. Incidentally, when two or more kinds of BRs are used together, the total amount of combined BRs is regarded as the content of BR.

Referring to the explanation on the whole diene rubber, a content of the diene rubber is not limited particularly. The content of the diene rubber is, for example, preferably not less than 70% by mass, more preferably not less than 80% by mass, further preferably not less than 90% by mass in the rubber component. Further, the content of the diene rubber may be 100% by mass. When the content of the diene rubber is within the above-mentioned range, enough heat resistance, abrasion resistance and grip performance of the rubber composition can be obtained easily. Incidentally, the rubber component according to this embodiment may comprise rubber components other than the diene rubber. Examples of such rubber components include ethylene propylene rubber, urethane rubber, acrylic rubber and the like.

### (Branched alkane having 40 to 70 carbon atoms)

The rubber composition according to this embodiment comprises 0.5 to 2.0 parts by mass of a branched alkane having 40 to 70 carbon atoms based on 100 parts by mass of the rubber component. Bleeding of such a branched alkane does not arise unless an environmental temperature is 60°C or higher. Therefore, by compounding a predetermined amount of such a branched wax, even when a tire is stored in a warehouse in a summertime, a rubber composition does not cause whitening and mold releasability can be improved. Specifically it can be considered that such a branched wax bleeds on a surface of a rubber instantly prior to starting of vulcanization and fills up concave and convex of a mold surface, thereby improving mold releasability. Further, such a branched wax can be solidified into a particle form on a rubber surface. Therefore, even in a case where such a branched wax is compounded, an obtained rubber composition does not form a hard film, does not deteriorate initial grip performance and hardly deteriorate ozone resistance. Furthermore, such a bleeding branched wax reaches a temperature of 150°C to 190°C at the time of mold processing and therefore, is a liquid, its viscosity on a mold surface is small, and a tire is easily released from a mold. It is noted that in order to maintain good ozone resistance, a linear alkane having 20 to 30 carbon atoms and an antioxidant explained later can be compounded suitably. Since the number of carbon atoms of the branched alkane is 40 or more, the above-mentioned bleeding arises easily at a vulcanization temperature (for example, 150°C to 200°C). Further since the number of carbon atoms of the branched alkane is 70 or less, a rubber composition exhibits a proper viscosity, its lubricity between the mold and the tire is improved, and the tire is easily released from the mold. Furthermore, the rubber composition exhibits a proper film hardness even at use of a mold. It should be noted that in a case of a wax having more than 70 carbon atoms and a molecular weight exceeding 1,000, its melting point is apt to be high and a hard film is apt to be formed. On the other hand, as mentioned above, the branched alkane according to this embodiment having 40 to 70 carbon atoms does not form a hard film and is suitable for a tire.

A method of obtaining a predetermined content of the branched alkane having 40 to 70 carbon atoms is not limited particularly. For example, by compounding a wax comprising a predetermined amount of branched alkane having 40 to 70 carbon atoms to a rubber composition, it is possible to compound the branched alkane having 40 to 70 carbon atoms within the above-mentioned range of the content. Such a wax is not limited particularly. Examples thereof include those manufactured and sold by NIPPON SEIRO CO., LTD.

The content of the branched alkane having 40 to 70 carbon atoms is not less than 0.5 part by mass based on 100 parts by mass of the rubber component from a point that bleeding is apt to arise at a high temperature and an obtained rubber composition is excellent in releasability from a mold. Further, the content of the branched alkane having 40 to 70 carbon atoms is not more than 2.0 parts by mass based on 100 parts by mass of the rubber component from the viewpoint of good initial grip performance and from the viewpoint of whitening.

### (Linear alkane having 45 or more carbon atoms)

The rubber composition according to this embodiment comprises 1.2 parts by mass or less and not less than 0.05 part by mass of a linear alkane having 45 or more carbon atoms based on 100 parts by mass of the rubber component. A method of obtaining a predetermined content of the linear alkane having 45 or more carbon atoms is not limited particularly. For example, by compounding a wax comprising a predetermined amount of linear alkane having 45 or more carbon atoms to a rubber composition, it is possible to compound the linear alkane having 45 or more carbon atoms within the above-mentioned range of the content. Such a wax is not limited particularly. Examples thereof include those manufactured and sold by NIPPON SEIRO CO., LTD.

The content of the linear alkane having 45 or more carbon atoms is not more than 1.2 parts by mass, preferably not more than 1.0 part by mass, more preferably not more than 0.9 part by mass based on 100 parts by mass of the rubber component from a point that whitening of an appearance of the obtained rubber composition is inhibited. Further, a lower limit of the content of the linear alkane having 45 or more carbon atoms is not less than 0.05 part by mass. When the content of the linear alkane having 45 or more carbon atoms is not less than 0.05 part by mass based on 100 parts by mass of the rubber component, a static ozone crack resistance under a high temperature environment is good.

### (Hydrocarbon resin having a weight-average molecular weight of 300 to 15,000)

The hydrocarbon resin having a weight-average molecular weight (Mw) of 300 to 15,000 is not limited particularly. Examples of the hydrocarbon resin having the Mw of 300 to 15,000 include phenolic resins, coumarone resins, coumarone-indene resins, indene resins, petroleum resins (aliphatic petroleum resins, aromatic petroleum resins, alicyclic petroleum resins, etc.), terpene-based resins, styrene resins, acrylic resins, rosin resins, dicyclopentadiene resins (DCPD resins) and the like. The hydrocarbon resins may comprise oxygen element derived from COOH, OH, coumarone or the like.

Further, the hydrocarbon resin according to this embodiment may comprise an alkylphenol resin, an alkylphenol formaldehyde resin and the like to be used for crosslinking a vulcanization bladder. Among these, it is preferable that the hydrocarbon resin comprises an alkylphenol formaldehyde resin for application to crosslinking a vulcanization bladder. A commercially available one may be used as the alkylphenol formaldehyde resin. Examples of a commercially available alkylphenol formaldehyde resin include those manufactured and sold by Taoka Chemical Co., Ltd. (for example, TACKIROL 201, Mw: 2500 to 4000, softening point: 88°C).

Examples of the phenolic resins include phenolic resins, modified phenolic resins and the like. The phenolic resins can be obtained by reacting phenol with aldehyde such as formaldehyde, acetaldehyde, furfural or the like using an acid or an alkali catalyst. Modified phenolic resins are those modified using compounds such as cashew oil, tall oil, linseed oil, various animal oils and vegetable oils, unsaturated fatty acids, rosin, an alkylbenzene resin, aniline and melamine. From a point that good hardness can be obtained by a curing reaction, it is preferable that a phenolic resin is a modified phenolic resin. Examples of the phenolic resin include those manufactured and sold by BASF Japan, Taoka Chemical Co., Ltd. and the like.

Coumarone-indene resins are resins comprising coumarone and indene. Examples the coumarone-indene resins include those manufactured and sold by NITTO CHEMICAL CO., LTD., Nippon Steel & Sumikin Chemical Co., Ltd., Nippon Petrochemicals Co., Ltd., etc.

Examples of the styrene resin include those manufactured and sold by Arizona Chemical Company, LLC.

The terpene resin is not limited particularly. Examples of the terpene resins include polyterpene resins comprising at least one selected from starting terpene compounds such as α-pinene, β-pinene, limonene and dipentene; aromatic modified terpene resins prepared using a terpene compound and an aromatic compound as starting materials; terpene phenolic resins prepared using a terpene compound and a phenolic compound as starting materials (unhydrogenated terpene resins); hydrogenated terpene resins prepared by subjecting the mentioned terpene resins to hydrogenation treatment (hydrogenated terpene resins); and the like. Examples of the aromatic compounds as starting compounds for the aromatic modified terpene resins include styrene, α-methylstyrene, vinyltoluene, divinyl toluene and the like. Examples of the phenolic compounds as starting compounds for the terpene phenolic resins include phenol, bisphenol A cresol, xylenol and the like.

Among these, preferred terpene resins are hydrogenated terpene resins from the viewpoint of good compatibility with a butyl rubber. Further, the terpene resin may be one subjected to nearly 100% hydrogenation, and further, is preferably a hydrogenated polyterpene resin from the viewpoint of good durability. It is noted that hydrogenation treatment of the terpene resin can be performed by a known method. Further, in this embodiment, commercially available hydrogenated terpene resins may be used.

A glass transition temperature (Tg) of the hydrogenated terpene resin is preferably 70°C or lower, more preferably 65°C or lower from the viewpoint of preventing the Tg of the rubber composition from becoming higher and durability from deteriorating. Further, a lower limit of the Tg of the hydrogenated terpene resin is not limited particularly. The Tg of the hydrogenated terpene resin is preferably 5°C or higher from the viewpoint of enabling low volatility to be secured.

An SP value of the hydrogenated terpene resin is preferably close to an SP value of a butyl rubber of 7.7 to 8.1 and is preferably not more than 8.4.

When the rubber composition comprises the hydrogenated terpene resin, a content thereof is preferably not less than 1 part by mass, more preferably not less than 2 parts by mass based on 100 parts by mass of the rubber component from a point that an effect of this embodiment can be obtained satisfactorily. On the other hand, the content of the hydrogenated terpene resin is preferably not more than 60 parts by mass, more preferably not more than 50 parts by mass from the viewpoint of making it possible to properly secure a hardness, mold processability and viscosity of the rubber composition.

Examples of the terpene resins include those manufactured and sold by Arizona Chemical Company, LLC and Yasuhara Chemical Co., Ltd.

A rosin resin is a resin comprising a rosin acid as a main component and obtained by processing a rosin oil. Examples of the rosin resin include natural rosin resins (polymerized rosin) such as rubber rosin, wood rosin and tall oil resin comprising, as a main component, resin acid such as abietic acid, neoabietic acid, palustric acid, levopimaric acid, pimaric acid, isopimaric acid or dehydroabietic acid; modified rosin resins such as a hydrogenated rosin resin; an unsaturated carboxylic acid-modified rosin resin and rosin-modified phenolic resin; rosin esters such as rosin glycerin ester and unsaturated carboxylic acid-modified rosin ester; a disproportionated rosin resin obtained by disproportionating a rosin resin; and the like.

Rosin ester resins are rosin resins generated by an esterification reaction of the above-mentioned rosins with polyol (glycerin, pentaerythritol or the like). The esterification reaction is not limited particularly. Example of the esterification reaction include a method of heating rosins and polyol to 200 - 300°C under an inert gas atmosphere and eliminating generated water out of a reaction system.

A softening point of the rosin resin is not limited particularly. The softening point of the rosin resin may be the same as a softening point of the above-mentioned terpene-based resin.

When the rubber composition comprises the rosin resin, its content is preferably not less than 1 part by mass, more preferably not less than 2 parts by mass based on 100 parts by mass of the rubber component from a point that good tensile property can be obtained. Further, the content of the rosin resin is preferably not more than 20 parts by mass, more preferably not more than 15 parts by mass from a point that a hardness, mold processability and a viscosity of the rubber composition can be adjusted properly.

Examples of the rosin resins include those manufactured and sold by Harima Chemicals Group, Inc., Arakawa Chemical Industries, Ltd., etc.

Referring to the overall explanation of the hydrocarbon resin, a content of the hydrocarbon resin is not less than 0.1 part by mass, preferably not less than 1.0 part by mass, more preferably not less than 2.0 parts by mass, further preferably not less than 11 parts by mass from a point that wear resistance and initial wet grip performance are excellent. On the other hand, the content of the hydrocarbon resin is not more than 100 parts by mass, preferably not more than 75 parts by mass, more preferably not more than 50 parts by mass from a point that wear resistance and initial wet grip performance are excellent.

A softening point of the hydrocarbon resin is preferably 160°C or lower, more preferably 145°C or lower, further preferably 125°C or lower, from the viewpoint of good grip performance. On the other hand, the softening point is preferably 0°C or higher, more preferably 20°C or higher, further preferably 30°C or higher, from the viewpoint of good grip performance. In this embodiment, the softening point of the resin is one specified in JIS K6220-1: 2001 and is a temperature at the time when the ball has dropped in the measurement with the ring and ball softening point measuring device. Meanwhile, Koreshin (softening point: 145°C, available from BASF) which is used preferably in a tire for racing is excellent in grip performance, but a problem with strong tackiness with equipment is apt to arise. However, the branched alkane used herein exhibits good metal mold releasability.

A Tg of the hydrocarbon resin is preferably 110°C or lower, more preferably 105°C or lower, further preferably 100°C or lower from the viewpoint of good compatibility with the rubber component. On the other hand, the Tg of the hydrocarbon resin is preferably -35°C or higher, more preferably 0°C or higher, further preferably 30°C or higher from the viewpoint of good compatibility with the rubber component.

An Mw of the hydrocarbon resin is preferably not less than 300, more preferably not less than 400, further preferably not less than 500 from a point that the resin hardly volatilizes and grip performance is good. On the other hand, the Mw of the hydrocarbon resin is preferably not more than 15000, more preferably not more than 13000, further preferably not more than 11000 from a point that the resin is easily entangled with a polymer and is hardly separated therefrom, resulting in good dry grip performance. When the Mw is within the above-mentioned range, an obtained rubber composition is excellent in processability, and heat build-up characteristic and elongation at break can be improved.

An SP value of the hydrocarbon resin is preferably 7.0 or more, more preferably 7.5 or more, further preferably 7.8 or more from the viewpoint of good compatibility with the rubber component (especially a butyl rubber). Further, the SP value is preferably 11.5 or less, more preferably 10 or less, further preferably 9.0 or less from the viewpoint of good compatibility with the rubber component (especially a butyl rubber). It is noted that in this embodiment, the SP value stands for a solubility parameter calculated by the Hoy method based on a structure of a compound. The above-mentioned Hoy method is a calculation method described in, for example, K.L. Hoy "Table of Solubility Parameters", Solvent and Coatings Materials Research and Development Department, Union Carbites Corp. (1985).

From a point that especially excellent initial wet grip performance can be obtained, it is preferable that the rubber composition according to this embodiment comprises the hydrocarbon resin having a softening point of 160°C or lower in an amount of 11 parts by mass or more based on 100 parts by mass of the rubber component and that such a hydrocarbon resin is a styrene-terpene resin or a rosin resin.

### (Linear alkane having 20 to 32 carbon atoms)

According to the present invention, the rubber composition comprises 1.2 parts by mass or less and not less than 0.05 part by mass of a linear alkane having 20 to 32 carbon atoms based on 100 parts by mass of the rubber component. A method of obtaining a predetermined content of the linear alkane having 20 to 32 carbon atoms is not limited particularly. For example, by compounding a wax comprising a predetermined amount of linear alkane having 20 to 32 carbon atoms to a rubber composition, it is possible to compound the linear alkane having 20 to 32 carbon atoms within the above-mentioned content. Such a wax is not limited particularly. Example thereof includes one manufactured and sold by NIPPON SEIRO CO., LTD. In the case of such a linear alkane within the above-mentioned range of parts by mass, when a tire is stored, for example, in a warehouse in a summertime (under an environment of 35°C to 50°C), blooming hardly arises and the linear alkane can stay in the rubber composition. Therefore, even in the case where the rubber composition comprises the predetermined amount of the linear alkane having the above-mentioned number of carbon atoms, lowering of initial grip performance and whitening of the rubber composition hardly occur.

A content of the linear alkane having 20 to 32 carbon atoms is not more than 1.2 parts by mass, more preferably not more than 1.0 part by mass, further preferably not more than 0.9 part by mass based on 100 parts by mass of the rubber component from a point that grip performance of an obtained rubber composition is excellent. Further, the content of the linear alkane having 20 to 32 carbon atoms is not less than 0.05 part by mass, more preferably not less than 0.1 part by mass, further preferably not less than 0.15 part by mass, particularly preferably not less than 0.2 part by mass based on 100 parts by mass of the rubber component from a point that ozone crack resistance of an obtained rubber composition is excellent. Ozone crack resistance can also be improved by increasing an amount of an antioxidant (for example, Antigene 6C manufactured by Sumitomo Chemical Company, Limited).

### (Optional components)

Next, optional components to be properly compounded in the rubber composition according to this embodiment will be described below. In addition to the above-mentioned components, other components commonly used in manufacturing of the rubber composition can be optionally compounded in the rubber composition according to this embodiment. Examples of such optional components include fillers, surfactants, stearic acid, metal salts of saturated fatty acids, process oil, antioxidants, vulcanizing agents, zinc oxide, heat resistance improver, flame retardants, heat conductivity imparting agent, crosslinking agents and the like.

### (Filler)

Filler is not limited particularly, and there are, for example, carbon black, silica, aluminum hydroxide, diatomaceous earth, calcium carbonate, talc and the like.

A content of the filler is preferably not less than 45 parts by mass, more preferably not less than 50 parts by mass, further preferably not less than 55 parts by mass based on 100 parts by mass of the rubber component from a point that the obtained rubber composition can obtain enough reinforceability and thermal conductivity is excellent. On the other hand, the content of the filler is preferably not more than 120 parts by mass, more preferably not more than 110 parts by mass, further preferably not more than 100 parts by mass from a point that dispersibility of the whole fillers and durability of the obtained rubber composition are excellent.

Carbon black is not limited particularly. Examples of the carbon black include furnace black, acetylene black, thermal black, channel black, graphite and the like. These carbon blacks may be used in combination.

A nitrogen adsorption specific surface area (N₂SA) of the carbon black is preferably 40 m²/g or more, more preferably 60 m²/g or more from the viewpoint of improving durability. Further, the N₂SA is preferably 300 m²/g or less, more preferably 140 m²/g or less from the viewpoint of securing dispersibility and thermal conductivity satisfactorily. Herein, the N₂SA of the carbon black is a value measured by the BET method in accordance with ASTM D3037-81.

A content of the carbon black is preferably not less than 2 parts by mass, more preferably not less than 3 parts by mass based on 100 parts by mass of the rubber component from a point that the obtained rubber composition can obtain enough UV crack resistance and reinforceability and thermal conductivity is excellent. On the other hand, the content of carbon black is preferably not more than 90 parts by mass, more preferably not more than 80 parts by mass from the viewpoint of excellent elongation at break and crack growth resistance.

Silica is not limited particularly. For example, silica commonly used in tire industry can be used. Examples of silica include those manufactured and sold by Rhodia Japan, Ltd., Evonik Japan Co., Ltd., etc.

A nitrogen adsorption specific surface area (N₂SA) of the silica is preferably not less than 20 m²/g, more preferably not less than 30 m²/g from a point of obtaining enough reinforceability. On the other hand, the N₂SA of the silica is preferably not more than 250 m²/g, more preferably not more than 240 m²/g. It is noted that the N₂SA of the silica is a value measured by the BET method in accordance with ASTM D3037-81.

### Silane coupling agent

When the silica is used as the filler, it is preferable that the silica is used in combination with a silane coupling agent. The silane coupling agent is not limited particularly. The silane coupling agent may be any silane coupling agent which has been used in combination with the silica in the rubber industry. Examples thereof include sulfide silane coupling agents such as bis(3-triethoxysilylpropyl)disulfide and bis(3-triethoxysilylpropyl)tetrasulfide; mercapto silane coupling agents (mercapto group-containing silane coupling agents) such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. These silane coupling agents may be used in combination. Examples of the silane coupling agent include those manufactured and sold by Evonik Japan Co., Ltd., etc.

When the silane coupling agent is used in combination, the content thereof is preferably not less than 4.0 parts by mass, more preferably not less than 6.0 parts by mass based on 100 parts by mass of the silica. On the other hand, the content of the silane coupling agent is preferably not more than 12 parts by mass, more preferably not more than 10 parts by mass based on 100 parts by mass of the silica. When the content of the silane coupling agent is not less than 4.0 parts by mass, dispersion of the filler in the rubber composition can be satisfactory. When the content of the silane coupling agent is not more than 12 parts by mass, the filler is dispersed satisfactorily in the rubber composition and reinforceability of an obtained tire is apt to be improved.

### (Surfactant)

A surfactant is not limited particularly. Examples of the surfactant include a Pluronic nonionic surfactant, chain ethylene oxide, a compound represented by a formula (1) described later and the like.

### Pluronic nonionic surfactant

The Pluronic nonionic surfactant is called polyoxyethylene polyoxypropylene glycol, polyoxyethylene polyoxypropylene block polymer or polypropylene glycol ethylene oxide adduct, and is generally a nonionic surfactant represented by the following formula (I). As represented by the following formula (I), the Pluronic nonionic surfactant has hydrophilic groups having an ethylene oxide structure at both sides thereof, and has hydrophobic groups having a propylene oxide structure and being interposed between the two hydrophilic groups. 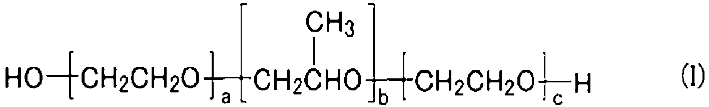 (in the formula (I), a, b and c represent integers)

A degree of polymerization of polypropylene oxide block (b of the above formula (I)) and an added amount of polyethylene oxide (a+c of the above formula (I)) of the Pluronic nonionic surfactant are not limited particularly, and can be selected optionally depending on use conditions and purpose. As a rate of the polypropylene oxide block increases, there is a tendency that affinity for the rubber becomes high and a speed of migration to the rubber surface becomes slow. From a point that blooming of the nonionic surfactant can be controlled suitably, the degree of polymerization of polypropylene oxide block (b of the above formula (I)) is preferably not more than 100, more preferably 10 to 70. The added amount of polyethylene oxide (a+c of the above formula (I)) is preferably not more than 100, more preferably 3 to 65. When the degree of polymerization of polypropylene oxide block and the added amount of polyethylene oxide are within the above-mentioned ranges, blooming of the nonionic surfactant of the rubber composition can be controlled suitably.

Examples of the Pluronic nonionic surfactant include those manufactured and sold by BASF Japan, Sanyo Chemical Industries, Ltd., ADEKA CORPORATION, DAI-ICHI KOGYO SEIYAKU CO., LTD., NOF CORPORATION and the like. These may be used in combination.

When the rubber composition comprises the Pluronic nonionic surfactant, a content of the Pluronic nonionic surfactant is not limited particularly. For example, the content of the Pluronic nonionic surfactant is preferably not less than 0.1 part by mass, more preferably not less than 0.3 part by mass based on 100 parts by mass of the rubber component. On the other hand, the content of the Pluronic nonionic surfactant is preferably not more than 5.0 parts by mass, more preferably not more than 4.0 parts by mass based on 100 parts by mass of the rubber component. When the content of the Pluronic nonionic surfactant is within the above-mentioned range, the rubber composition provides excellent steering stability, crack resistance, ozone resistance and resistance to discoloration.

In this embodiment, the Pluronic nonionic surfactant is subject to bleeding in about a few days after vulcanization. Therefore, such a surfactant can play a complementary role until a film is formed by a wax comprising the above-mentioned branched alkane. Further, such a surfactant can dissolve a non-polar linear alkane wax. Furthermore, such a surfactant can enter into the linear alkane wax, make the obtained film flexible and allow the film to be hardly cracked. Therefore, by compounding such a surfactant, dynamic ozone resistance of the rubber composition can be improved.

### Chain ethylene oxide

The chain ethylene oxide is not limited particularly. Examples of the chain ethylene oxide include 50HB-100, 50HB-2000, etc. available from Sanyo Chemical Industries, Ltd. In particular, the chain ethylene oxide is preferred from the viewpoint of inhibition of scorching and resistance to discoloration. The chain ethylene oxide may be used in combination with the Pluronic nonionic surfactant and polyethylene glycol (PEG).

When the rubber composition comprises the chain ethylene oxide, a content thereof is not limited particularly. For example, the content of the chain ethylene oxide is preferably not less than 0.1 part by mass, more preferably not less than 0.5 part by mass based on 100 parts by mass of the rubber component. On the other hand, the content of the chain ethylene oxide is preferably not more than 10 parts by mass, more preferably not more than 5 parts by mass based on 100 parts by mass of the rubber component. When the content of the chain ethylene oxide is within the above-mentioned range, the rubber composition assures inhibition of scorching and is excellent in resistance to discoloration.

### Compound represented by formula (1)

The rubber composition according to this embodiment may comprise the compound represented by the following formula (1) as a surfactant. 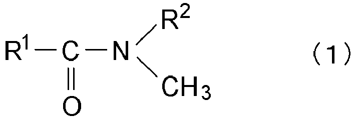 In the formula (1), R¹ represents an alkyl group or alkenyl group having 8 to 14 carbon atoms; the alkyl group and the alkenyl group may be any of linear, branched or cyclic group; and R² represents a hydroxyalkyl group or a hydroxyalkyl group having an oxyalkylene unit.

When the rubber composition comprises such a compound, surfaces of fillers are covered with this compound, and agglomeration of the fillers can be inhibited. Further, a viscosity of the rubber composition can be decreased and dispersion of the fillers can be improved. As a result, processability, fuel consumption and abrasion resistance can be improved.

The compound represented by the formula (1) is characterized in that a nitrogen atom is methylated, namely one of substituents bonded to the nitrogen atom is a methyl group as compared with fatty acid monoethanolamide and fatty acid diethanolamide which are compounded for improving processability of a conventional rubber composition comprising fillers. By methylation of a nitrogen atom, crystallization is hardly generated and the compound is easily formed into a liquid at normal temperature, thereby decreasing a viscosity of the rubber composition. As a result, the fillers are easily dispersed.

R¹ in the formula (1) is an alkyl group or alkenyl group having 8 to 14 carbon atoms from the viewpoint of a viscosity, a scorching time and fuel efficiency of the rubber composition, and the alkyl group and the alkenyl group may be any of linear, branched or cyclic group. Examples of the alkyl group and the alkenyl group include alkyl groups such as octyl, nonyl, isononyl, decyl, undecyl, dodecyl (lauryl), tridecyl and isotridecyl; alkenyl groups such as octene, nonene and decene; and the like. It is noted that the compound represented by the formula (1) may be coconut oil fatty acids comprising two or more kinds of compounds having a different alkyl group or alkenyl group. Further, it is preferable that fatty acids as starting materials for the compounds are lauric acid, tridecylic acid, myristic acid, coconut oil fatty acids, palm kernel oil fatty acids and the like.

R² in the formula (1) is a hydroxyalkyl group or a hydroxyalkyl group having an oxyalkylene unit. The alkyl group is preferably a linear or branched alkyl group having 1 to 6 carbon atoms, more preferably an alkyl group having 2 to 3 carbon atoms. Further, R² in the formula (1) is preferably one represented by the following formula (2), R³ is preferably an alkylene group having 1 to 6 carbon atoms, and "n" is preferably an integer of 1 to 5.

-(R³O)n-H (2)

In particular, it is preferable that R³ is ethylene or propylene and "n" is preferably 1 to 3, more preferably 1, and it is further preferable that R³ is ethylene and "n" is 1. Additionally, "n" R³ may be different from each other.

Examples of specific compounds represented by the formula (1) include coconut oil fatty acid N-methyl ethanolamide, palm kernel oil fatty acid N-methyl ethanolamide, lauric acid N-methyl ethanolamide and the like.

When the rubber composition comprises the compound represented by the formula (1), a content of the compound represented by the formula (1) is preferably not less than 0.5 part by mass, more preferably not less than 1.0 part by mass based on 100 parts by mass of the rubber component from a point of covering a surface of the fillers to easily exhibit a viscosity-decreasing effect. On the other hand, the content of the compound represented by the formula (1) is preferably not more than 10 parts by mass, more preferably not more than 5 parts by mass for effectively inhibiting degradation by thermal oxidation and not to block a reaction of the rubber component with the fillers.

When the rubber composition comprising the fillers comprises the compound represented by the formula (1), it is conjectured that the compound makes surfaces of the fillers hydrophobic to inhibit agglomeration of the fillers, thereby making processability satisfactory.

### (Stearic acid)

When the rubber composition comprises stearic acid, a working viscosity can be reduced and a suitable vulcanization speed can be ensured. Moreover, since zinc stearate bonded with zinc oxide blooms on the surface of a rubber, slipping property can be improved, and inhibition of mold contamination and improvement of dispersibility of the zinc oxide can be expected. In addition, by combination use of stearic acid and a specific mold release agent, satisfactory processability and vulcanization speed of the rubber composition, good tire performance and an effect of inhibiting mold contamination can be obtained easily.

### (Metal salt of saturated fatty acid)

Metal salt of saturated fatty acid is not limited particularly. Examples of the metal salt of saturated fatty acid include zinc stearate, fatty acid zinc, a specific mold release agent and the like.

Zinc stearate is low in solubility in the rubber component, and can be used as an adhesion inhibitor on a tire molding machine. When the rubber composition comprises zinc stearate, the zinc stearate blooms as white crystal particles on the surface of a rubber, thereby improving slipping property and enabling a crude rubber to be hardly adhered to a metal mold excessively.

Fatty acid zinc enables a crude rubber being hardly adhered to a metal mold excessively to be obtained without deteriorating tackiness at molding, thereby making it possible to inhibit mold contamination.

The specific mold release agent is a mold release agent comprising at least one selected from the group consisting of metal salts of fatty acids, fatty acid amides and amide esters. Examples of the metals in the metal salts of fatty acids include calcium, zinc, potassium, sodium and the like. Among these, preferred as the mold release agent is fatty acid calcium salt since it is inexpensive, does not cause environmental contamination and does not affect the vulcanization speed.

It is preferable that the specific mold release agent is a mixture of fatty acid calcium salt and fatty acid amide, a mixture of fatty acid calcium salt and amide ester, amide ester or the like. Examples of the fatty acid amide include oleamide, erucic acid amide and the like. These are manufactured and sold by Structol GmbH, Rhein Chemie Corporation and the like.

### (Process oil)

Process oil is not limited particularly. Examples of the process oil include a paraffin process oil, an aromatic process oil, a naphthenic process oil, castor oil (for a vulcanization bladder) and the like. Process oil may be used in combination.

When the rubber composition comprises process oil, a content of the process oil is not limited particularly. For example, the content of the process oil is preferably not less than 1 part by mass, more preferably not less than 2 parts by mass based on 100 parts by mass of the rubber component from the viewpoint of less effect on mold releasability, plasticization of a rubber and improvement of dispersibility of fillers. Further, the content of the process oil is preferably not more than 30 parts by mass, more preferably not more than 20 parts by mass based on 100 parts by mass of the rubber component since the process oil can comprise a lot of resins for improving grip performance. However, there may be a case where the content of the process oil is 30 to 100 parts by mass based on 100 parts by mass of the rubber component in the case of compounding for viscosity and high grip performance for racing.

### (Antioxidant)

The antioxidant is not limited particularly. The antioxidant can be selected optionally from a variety of antioxidants having been used commonly for a rubber composition. Examples thereof include quinoline antioxidants, quinone antioxidants, phenol antioxidants, phenylenediamine antioxidants and the like. The antioxidant may be used in combination.

When the rubber composition comprises an antioxidant, a content of the antioxidant is not limited particularly. For example, the content of the antioxidant is preferably not less than 0.1 part by mass, more preferably not less than 0.5 part by mass based on 100 parts by mass of the rubber component. On the other hand, the content of antioxidant is preferably not more than 10 parts by mass, more preferably not more than 7 parts by mass based on 100 parts by mass of the rubber component. When the content of antioxidant is within the above-mentioned range, oxidation degradation resistance of fillers is apt to be improved and good tensile property is apt to be exhibited. Further, an obtained rubber composition is easily kneaded. In this embodiment, a bleeding speed of the antioxidant (for example, phenylenediamine antioxidant) is slower than that of a wax comprising the above-mentioned branched alkane or the like. However, for example, in the case of a phenylenediamine antioxidant, by compounding it in an amount of 4 parts by mass or more based on 100 parts by mass of rubber component, a bleeding speed is increased, and even after manufacturing, static ozone resistance can be improved.

### Crosslinking agent

A crosslinking agent is not limited particularly. Examples of the crosslinking agent include sulfur and crosslinkable resin, and use of a crosslinkable resin is preferable from a point that dispersion of zinc oxide and the crosslinkable resin itself becomes satisfactory. Example of the crosslinkable resin include alkylphenol formaldehyde resins and the like. An alkylphenol formaldehyde resin is not limited particularly. For example, non-halogenated alkylphenol formaldehyde resin is preferable from a point that heat resistance thereof is excellent. A content of methylol group in the alkylphenol formaldehyde is usually 7 to 10% by mass.

When the rubber composition comprises the crosslinking agent, its content is preferably not less than 1 part by mass, more preferably not less than 2 parts by mass, further preferably not less than 3 parts by mass based on 100 parts by mass of rubber component. On the other hand, the content of the crosslinking agent is preferably not more than 15 parts by mass, more preferably not more than 12 parts by mass. When the content of the crosslinking agent is within the above-mentioned range, the obtained rubber composition is crosslinked sufficiently, and for example, when used for a vulcanization bladder, a bladder life and bladder performance of the obtained vulcanization bladder become excellent.

A crosslinking accelerator is compounded suitably. Further a hybrid crosslinking agent, zinc powder and fatty acids may be compounded properly.

### <Method of preparing rubber composition>

The rubber composition according to this embodiment of the present invention can be prepared by a usual method. The rubber composition can be prepared, for example, by a method of kneading the above-mentioned components other than the crosslinking agent and the vulcanization accelerator with a generally well-known kneading machine used in a rubber industry such as a Banbury mixer, a kneader or an open roll and then adding the crosslinking agent and the vulcanization accelerator, followed by further kneading and then conducting vulcanization, or by other method.

The rubber composition according to this embodiment of the present invention comprises predetermined amounts of the above-mentioned specific branched wax and linear wax and a predetermined amount of the above-mentioned hydrocarbon resin. Thus, a blooming phenomenon of the wax is adjusted most suitably. Namely, it can be considered that molecular mobility and vermicular motion of the wax and molecular mobility and vermicular motion of the hydrocarbon resin are adjusted in good balance, thereby allowing the above-mentioned alkane wax to move in the rubber composition, causing bleeding or the like on a surface and improving releasability of a tire from a metal mold.

### <Application of rubber composition>

The rubber composition according to this embodiment of the present invention has good releasability from a metal mold or the like. Further, the rubber composition according to this embodiment of the present invention also has good releasability from a Banbury mixer, an extruder or the like. Also, the rubber composition according to this embodiment of the present invention is suitable for application to a vulcanization bladder. Namely, when the vulcanization bladder is made of the rubber composition according to this embodiment of the present invention, the vulcanization bladder can be manufactured by extrusion-molding an un-vulcanized rubber composition from an extruder, then molding into a form of a bladder and subjecting a molded article to crosslinking reaction. In this case, the rubber composition is hardly adhered to a metal mold and the like and is easily released.

When the rubber composition is for a vulcanization bladder, it is preferable that the rubber composition comprises not less than 80% by mass of a butyl rubber as a rubber component. Further it is preferable that the rubber composition comprises the above-mentioned alkylphenol formaldehyde resin as a crosslinkable resin.

Additionally, the rubber composition according to this embodiment of the present invention is useful for each tire member comprising an adhesive resin, a rubber soles of footwears, rubber belts, non-slip floor materials and the like. In particular, since the rubber composition can inhibit contamination of a metal mold while maintaining initial wet grip performance, it can be used suitably as an external member of a tire. An external member is not limited particularly. Examples thereof include a tread, a side wall, a wing, a clinch apex, an inner liner and the like. It is noted that there are cases where the inner liner comes into contact with a metal mold and with a vulcanization bladder. In this embodiment, the inner liner is included in external members from a point that it comes into contact with air. In particular, the rubber composition according to this embodiment of the present invention is useful when used for a tread where an area being in contact with a metal mold is large and there is a problem with excessive adhesion.

### <Method of producing tire>

A tire according to this embodiment of the present invention can be produced by a usual method using the above-mentioned rubber composition. Namely, the tire can be produced by subjecting an unvulcanized rubber composition to extrusion processing to a shape of each of external members of a tire (such as a tread, a side wall, a wing, a clinch apex, an inner liner and the like) and then laminating together with other tire members on a tire building machine and forming by a usual forming method, thus forming an unvulcanized tire, and heating and compressing this unvulcanized tire in a vulcanizer. In this case, the rubber composition has good releasability from a metal mold. Therefore, the rubber composition is hardly adhered to an extruder and the like as mentioned in the above preparation method.

### <Production of vulcanization bladder>

The vulcanization bladder according to this embodiment of the present invention can be made of the above-mentioned rubber composition. The vulcanization bladder can be produced by a usual method. For example, the vulcanization bladder can be produced by subjecting an unvulcanized rubber composition for a vulcanization bladder to extrusion-molding with an extruder into a sheet-like shape and then pressing and heating in a metal mold for vulcanization at 190°C for 20 minutes. In this case, the rubber composition has good releasability from a metal mold. Therefore, the rubber composition is hardly adhered to a metal mold of an extruder and the like.

### EXAMPLE

The present invention is then explained by means of Examples, but is not limited to the Examples.

A variety of chemicals used in Examples and Comparative Examples will be explained below.

### (Rubber component)

SBR1: N9548 (styrene content: 35% by mass, vinyl content: 35% by mass, Tg: -40°C, Mw: 1,090,000, 37.5 parts by mass is oil-extended to 100 parts by mass, available from ZEON CORPORATION)
SBR2: NS612 (styrene content: 15% by mass, vinyl content: 30% by mass, Tg: -65°C, Mw: 780,000, non-oil-extended, available from ZEON CORPORATION)
BR: CB25 (rare earth BR synthesized using Nd catalyst, content of cis 1,4 bond: 98.2% by mass, content of trans 1,4 bond: 1.4% by mass, vinyl content: 0.4% by mass, Tg: -110°C, available from LANXESS Japan)

### (Wax)

Paraffin: Ozoace 355 (melting point: 70°C, available from NIPPON SEIRO CO., LTD.)
Microcrystalline 1: Hi-Mic1080 (melting point: 84°C, available from NIPPON SEIRO CO., LTD.)
Microcrystalline 2: Hi-Mic1070 (melting point: 80°C, available from NIPPON SEIRO CO., LTD.)
Microcrystalline 3: Hi-Mic1045 (melting point: 72°C, available from NIPPON SEIRO CO., LTD.)

### (Filler)

Carbon black: SHOBLACK N220 (normal carbon, N₂SA: 114 m²/g, available from Cabot Japan K.K.
Silica: ULTRASIL VN3 (BET: 175 m²/g, available from Evonik Degussa GmbH
Silane coupling agent: Si75 (bis(3-triethoxysilylpropyl)disulfide, available from Evonik Degussa GmbH)

### (Hydrocarbon resin)

Hydrocarbon resin 1: YS Resin TO125 (styrene-terpene resin, softening point: 125°C, Tg: 64°C, SP value: 8.73, Mw: 800, available from Yasuhara Chemical Co., Ltd.)
Hydrocarbon resin 2: Sylvatraxx 4401 (α-methylstyrene resin, softening point: 85°C, Tg: 43°C, SP value: 9.1, Mw: 700, available from Arizona Chemical Company, LLC
Hydrocarbon resin 3: HARIESTER TF (rosin ester resin, softening point: 80°C, Mw: 1,000, available from Harima Chemicals Group, Inc.)
Hydrocarbon resin 4: ARUFON UF-5041 (solvent-free styrene acrylic resin (having a carboxyl group), purity: 98% by mass or more, softening point: 125°C, Tg: 77°C, acid value: 260 mgKOH/g, SP value: 11.3, Mw: 7,500, available from TOAGOSEI CO., LTD.)
Hydrocarbon resin 5: NOVARES C10 (liquid coumarone-indene resin, softening point: 10°C, Tg: -30°C, SP value: 8.8, Mw: 350, available from Ruetgers Chemicals)

### (Surfactant)

Surfactant 1: Newpol PE-64 (pluronic type nonionic surfactant, SP value: 9.2, available from Sanyo Chemical Industries, Ltd.)
Surfactant 2: 50HB-100 (chain ethylene oxide, polyoxyethylene polyoxypropylene butyl ether, EO average added mole number: 5, PO average added mole number: 5, SP value: 9.5, available from Sanyo Chemical Industries, Ltd.)
Surfactant 3: 50HB-2000 (chain ethylene oxide, polyoxyethylene polyoxypropylene butyl ether, EO average added mole number: 35, PO average added mole number: 28, SP value: 9.5, available from Sanyo Chemical Industries, Ltd.)
Surfactant 4: made on an experimental basis by Sanyo Chemical Industries, Ltd. (coconut oil fatty acid N-methyl monoethanolamide, SP value: 10.8)

### (Others)

Processing aid 1: Stearic acid "Tsubaki" (melting point: 53°C, SP value: 9.1, available from NOF CORPORATION)
Processing aid 2: EF44 (fatty acid zinc, available from Struktol GmbH)
Processing aid 3: WB16 (a mixture of fatty acid calcium salt, fatty acid monoethanolamide and fatty acid monoethanolamide ester, transparent melting point: 101°C, SP value: 10.0, available from Struktol GmbH)
Process oil: Diana Process AH-24 (available from Idemitsu Kosan Co., Ltd.)
Antioxidant 1: ANTIGENE 6C (N-phenyl-N'-(1,3-dimethylbutyl)-p-phenylenediamine, available from Sumitomo Chemical Company, Limited)
Antioxidant 2: NOCRAC 224 (2,2,4-trimethyl-1,2-dihydroquinoline polymer, available from Ouchi Shinko Chemical Industrial Co., Ltd.)
Zinc oxide: zinc white, class 2, specific weight: 5.6
Sulfur: HK-200-5 (oil content: 5% by mass, available from Hosoi Chemical Industry Co., Ltd.)
Vulcanization accelerator 1: Nocceler NS-G (TBBS, N-tert-butyl-2-benzothiazolylsulfeneamide available from OUCHI SHINKO CHEMICAL INDUSTRIAL CO., LTD.
Vulcanization accelerator 2: Nocceler D (DPG, 1,3-diphenylguanidine) available from OUCHI SHINKO CHEMICAL INDUSTRIAL CO., LTD.

### Examples and Comparative Examples

Chemicals except sulfur and vulcanization accelerators were kneaded in a 1.7-liter closed Banbury mixer according to the compounding formulations shown in Tables 1 and 2 for five minutes at a discharge temperature of 160°C to obtain a kneaded product. Then, the obtained kneaded product was kneaded again (remilled) at a discharge temperature of 150°C for four minutes by the Banbury mixer. Subsequently sulfur and a vulcanization accelerator were added to the obtained kneaded product, and kneaded for 4 minutes up to 105°C using a biaxial open roll to obtain an unvulcanized rubber composition. Further, the obtained unvulcanized rubber composition was subjected to press-vulcanization at 170°C for 12 minutes to produce a test rubber composition.

The obtained unvulcanized rubber composition was extrusion-molded into a form of a tread using an extruder with an extrusion nozzle having a specific shape, and an extrudate was laminated with other tire members to form an unvulcanized tire, followed by press-vulcanization at 170°C for 12 minutes to produce a test tire. The following evaluations were made using the obtained unvulcanized rubber compositions, test rubber compositions and test tires. The results of the evaluations are shown in Tables 1 and 2.

### <Index of mold releasability>

About 100 crude rubbers were vulcanized (170°C for 12 minutes) in a tire mold having a predetermined rib pattern to produce a summer tire (tire size: 195/65R15), and an incidence of rubber chipping of the rib pattern was indicated by an index. Usually when a tire is taken out from a mold, rubber chipping occurs at a pattern edge having an acute angle and a bottom of a sipe. The results are shown by an index, assuming the result of Comparative Example 1 to be 100. The larger the index is, the more excellent the mold releasability is. A performance target value is 105 or more.

### <Initial wet grip performance>

Each of the summer tires were loaded on all wheels of a vehicle for test (FF vehicle domestically produced, displacement: 2,000 cc), and on a wet road surface, a braking distance from an initial speed of 100 km/h was measured. The results are shown by an index in accordance with the following equation, assuming the result of Comparative Example 1 to be 100. The larger the index is, the more excellent the wet grip performance is. A performance target value is 100 or more, more preferably 101 or more. (Wet grip performance index) = (Braking distance of tires of Comparative Example 1) / (Braking distance of each test tire) × 100

### <Whitening>

A summer tire was allowed to stand inside a warehouse in July in Nagoya for one month, and L* was measured with a color difference meter and evaluated using an index of 100. The larger the index is, the smaller a degree of whitening is.

**Table 1**

| | | Example | | | | | | | | | |
|---|---|---|---|---|---|---|---|---|---|---|---|
| | | 1 | 2 | 3 | 4 | 5 | 6 | 7 | 8 | 9 | 10 |
| SBR 1 | | 41.25 | 41.25 | 41.25 | 41.25 | 41.25 | 41.25 | 41.25 | 41.25 | 41.25 | 41.25 |
| SBR 2 | | 50 | 50 | 50 | 50 | 50 | 50 | 50 | 50 | 50 | 50 |
| BR | | 20 | 20 | 20 | 20 | 20 | 20 | 20 | 20 | 20 | 20 |
| Carbon black | | 5 | 5 | 5 | 5 | 5 | 5 | 5 | 5 | 5 | 5 |
| Silica | | 100 | 100 | 100 | 100 | 100 | 100 | 100 | 100 | 100 | 100 |
| Silane coupling agent | | 8 | 8 | 8 | 8 | 8 | 8 | 8 | 8 | 8 | 8 |
| Hydrocarbon resin 1 | | - | - | - | - | - | - | - | - | - | - |
| Hydrocarbon resin 2 | | 10 | 10 | 10 | 10 | 10 | 10 | 10 | 10 | 10 | 10 |
| Hydrocarbon resin 3 | | - | - | - | - | - | - | - | - | - | - |
| Hydrocarbon resin 4 | | - | - | - | - | - | - | - | - | - | - |
| Hydrocarbon resin 5 | | - | - | - | - | - | - | - | - | - | - |
| Surfactant 1 | | - | - | - | - | - | - | - | - | - | 1.5 |
| Surfactant 2 | | - | - | - | - | - | - | - | - | - | - |
| Surfactant 3 | | - | - | - | - | - | - | - | - | - | - |
| Surfactant 4 | | - | - | - | - | - | - | - | - | - | - |
| Paraffin | | 1.0 | 1.0 | 1.0 | 0.5 | 1.5 | 1.5 | 1.5 | 1.5 | 0 | 1.0 |
| Mycrocrystalline 1 | | 1.0 | - | - | 2.0 | 3.0 | 0.5 | - | - | 3 | - |
| Mycrocrystalline 2 | | - | 1.0 | - | - | - | - | 3.0 | - | - | 1.0 |
| Mycrocrystalline 3 | | - | - | 1.0 | - | - | - | - | 2.0 | - | - |
| | (Branched alkane having 40 to 70 carbon atoms) | 0.553 | 0.621 | 0.722 | 0.982 | 1.535 | 0.359 | 1.739 | 1.402 | 1.410 | 0.621 |
| | (Linear alkane having 20 to 32 carbon atoms) | 0.554 | 0.554 | 0.565 | 0.351 | 0.905 | 0.781 | 0.904 | 0.878 | 0.148 | 0.554 |
| | (Linear alkane having 45 or more carbon atoms) | 0.317 | 0.256 | 0.132 | 0.578 | 0.895 | 0.195 | 0.713 | 0.245 | 0.839 | 0.256 |
| Processing aid 1 | | 2 | 2 | 2 | 2 | 2 | 2 | 2 | 2 | 2 | 2 |
| Processing aid 2 | | - | - | - | - | - | - | - | - | - | - |
| Processing aid 3 | | - | - | - | - | - | - | - | - | - | - |
| Process oil | | 20 | 20 | 20 | 20 | 20 | 20 | 20 | 20 | 20 | 18 |
| Antioxidant 1 | | 3.5 | 3.5 | 3.5 | 4 | 3 | 3 | 3 | 3 | 4.5 | 3.5 |
| Antioxidant 2 | | 1 | 1 | 1 | 1 | 1 | 1 | 1 | 1 | 1 | 1 |
| Zinc oxide | | 2 | 2 | 2 | 2 | 2 | 2 | 2 | 2 | 2 | 2 |
| Sulfur | | 1.50 | 1.50 | 1.50 | 1.50 | 1.50 | 1.50 | 1.50 | 1.50 | 1.50 | 1.50 |
| Vulcanization accelerator 1 | | 1.3 | 1.3 | 1.3 | 1.3 | 1.3 | 1.3 | 1.3 | 1.3 | 1.3 | 1.3 |
| Vulcanization accelerator 2 | | 2.5 | 2.5 | 2.5 | 2.5 | 2.5 | 2.5 | 2.5 | 2.5 | 2.5 | 2.5 |
| Mold releasability | | 112 | 115 | 116 | 105 | 119 | 107 | 123 | 118 | 120 | 117 |
| Initial wet grip performance | | 110 | 110 | 109 | 117 | 101 | 107 | 101 | 101 | 120 | 115 |
| Whitening | | 100 | 100 | 100 | 100 | 100 | 100 | 100 | 100 | 100 | 110 |

| 11 | 12 | 13 | 14 | 15 | 16 | 17 | 18 | 19 | 20 | | |
|---|---|---|---|---|---|---|---|---|---|---|---|
| SBR 1 | | 41.25 | 41.25 | 41.25 | 41.25 | 41.25 | 41.25 | 41.25 | 41.25 | 41.25 | 41.25 |
| SBR 2 | | 50 | 50 | 50 | 50 | 50 | 50 | 50 | 50 | 50 | 50 |
| BR | | 20 | 20 | 20 | 20 | 20 | 20 | 20 | 20 | 20 | 20 |
| Carbon black | | 5 | 5 | 5 | 5 | 5 | 5 | 5 | 5 | 5 | 5 |
| Silica | | 100 | 100 | 100 | 100 | 100 | 100 | 100 | 95 | 100 | 100 |
| Silane coupling agent | | 8 | 8 | 8 | 8 | 8 | 8 | 8 | 7.6 | 8 | 8 |
| Hydrocarbon resin 1 | | - | - | 10 | - | - | - | 20 | 40 | - | - |
| Hydrocarbon resin 2 | | 10 | 10 | - | - | - | - | - | - | 10 | 10 |
| Hydrocarbon resin 3 | | - | - | - | - | 10 | - | - | - | - | - |
| Hydrocarbon resin 4 | | - | - | - | - | - | 3 | - | - | - | - |
| Hydrocarbon resin 5 | | - | - | - | 10 | - | - | - | - | - | - |
| Surfactant 1 | | 1.5 | - | - | - | - | - | - | - | - | - |
| Surfactant 2 | | - | - | - | - | - | - | - | - | 1.5 | - |
| Surfactant 3 | | - | - | - | - | - | - | - | - | - | 1.5 |
| Surfactant 4 | | - | 3 | - | - | - | - | - | - | - | - |
| Paraffin | | 0 | 1.0 | 1.0 | 1.0 | 1.0 | 1.0 | 1.0 | 1.0 | 1.0 | 1.0 |
| Mycrocrystalline 1 | | 3 | - | - | - | - | - | - | - | - | - |
| Mycrocrystalline 2 | | - | 1.0 | 1.0 | 1.0 | 1.0 | 1.0 | 1.0 | 1.0 | 1.0 | 1.0 |
| Mycrocrystalline 3 | | - | - | - | - | - | - | - | - | - | - |
| | (Branched alkane having 40 to 70 carbon atoms) | 1.410 | 0.621 | 0.621 | 0.621 | 0.621 | 0.621 | 0.621 | 0.621 | 0.621 | 0.621 |
| | (Linear alkane having 20 to 32 carbon atoms) | 0.148 | 0.554 | 0.554 | 0.554 | 0.554 | 0.554 | 0.554 | 0.554 | 0.554 | 0.554 |
| | (Linear alkane having 45 or more carbon atoms) | 0.839 | 0.256 | 0.256 | 0.256 | 0.256 | 0.256 | 0.256 | 0.256 | 0.256 | 0.256 |
| Processing aid 1 | | 2 | 2 | 2 | 2 | 2 | 2 | 2 | 2 | 2 | 2 |
| Processing aid 2 | | - | - | - | - | - | - | - | - | - | - |
| Processing aid 3 | | - | - | - | - | - | - | - | - | - | - |
| Process oil | | 18 | 17 | 20 | 18 | 20 | 20 | 10 | 0 | 18 | 18 |
| Antioxidant 1 | | 4.5 | 3.5 | 3.5 | 3.5 | 3.5 | 3.5 | 3.5 | 3.5 | 3.5 | 3.5 |
| Antioxidant 2 | | 1 | 1 | 1 | 1 | 1 | 1 | 1 | 1 | 1 | 1 |
| Zinc oxide | | 2 | 2 | 2 | 2 | 2 | 2 | 2 | 2 | 2 | 2 |
| Sulfur | | 1.50 | 1.50 | 1.50 | 1.50 | 1.50 | 1.50 | 1.50 | 1.50 | 1.50 | 1.50 |
| Vulcanization accelerator 1 | | 1.3 | 1.3 | 1.3 | 1.3 | 1.3 | 1.3 | 1.3 | 1.3 | 1.3 | 1.3 |
| Vulcanization accelerator 2 | | 2.5 | 2.5 | 2.5 | 2.5 | 2.5 | 2.5 | 2.5 | 2.5 | 2.5 | 2.5 |
| Mold releasability | | 120 | 117 | 122 | 116 | 117 | 107 | 110 | 105 | 110 | 117 |
| Initial wet grip performance | | 128 | 112 | 115 | 110 | 115 | 102 | 123 | 140 | 119 | 112 |
| Whitening | | 110 | 102 | 100 | 100 | 100 | 100 | 100 | 100 | 112 | 118 |

**Table 2**

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| SBR 1 | | 41.25 | 41.25 | 41.25 | 41.25 | 41.25 | 41.25 | 41.25 | 41.25 | 41.25 | 41.25 |
| SBR 2 | | 50 | 50 | 50 | 50 | 50 | 50 | 50 | 50 | 50 | 50 |
| BR | | 20 | 20 | 20 | 20 | 20 | 20 | 20 | 20 | 20 | 20 |
| Carbon black | | 5 | 5 | 5 | 5 | 5 | 5 | 5 | 5 | 5 | 5 |
| Silica | | 100 | 100 | 100 | 100 | 100 | 100 | 100 | 100 | 100 | 100 |
| Silane coupling agent | | 8 | 8 | 8 | 8 | 8 | 8 | 8 | 8 | 8 | 8 |
| Hydrocarbon resin 1 | | - | - | - | - | - | - | - | 10 | - | - |
| Hydrocarbon resin 2 | | 10 | 10 | 10 | 10 | 10 | 10 | 0 | - | 110 | 10 |
| Hydrocarbon resin 3 | | - | - | - | - | - | - | - | - | - | - |
| Hydrocarbon resin 4 | | - | - | - | - | - | - | - | - | - | - |
| Hydrocarbon resin 5 | | - | - | - | - | - | - | - | - | - | - |
| Surfactant 1 | | - | - | - | - | - | - | - | - | - | - |
| Surfactant 2 | | - | - | - | - | - | - | - | - | - | - |
| Surfactant 3 | | - | - | - | - | - | - | - | - | - | - |
| Surfactant 4 | | - | - | - | - | - | - | - | - | - | - |
| Paraffin | | 2.5 | 2.5 | 3.5 | 1.5 | 2 | 2 | 2 | 2 | 1.0 | 2.5 |
| Mycrocrystalline 1 | | - | - | - | 5 | - | - | - | - | 1.0 | - |
| Mycrocrystalline 2 | | - | - | - | - | 6 | - | - | - | - | - |
| Mycrocrystalline 3 | | - | - | - | - | - | 6 | - | - | - | - |
| | (Branched alkane having 40 to 70 carbon atoms) | 0.207 | 0.207 | 0.290 | 2.475 | 3.394 | 3.999 | 0.166 | 0.166 | 0.553 | 0.207 |
| | (Linear alkane having 20 to 32 carbon atoms) | 1.261 | 1.261 | 1.766 | 1.004 | 1.304 | 1.371 | 1.009 | 1.009 | 0.554 | 1.261 |
| | (Linear alkane having 45 or more carbon atoms) | 0.092 | 0.092 | 0.129 | 1.454 | 1.390 | 0.642 | 0.074 | 0.074 | 0.317 | 0.092 |
| Processing aid 1 | | 2 | 2 | 2 | 2 | 2 | 2 | 2 | 2 | 2 | 2 |
| Processing aid 2 | | - | - | - | - | - | - | - | - | - | 2.0 |
| Processing aid 3 | | - | 2.0 | - | - | - | - | - | - | 4.0 | - |
| Process oil | | 20 | 19 | 20 | 20 | 20 | 20 | 30 | 20 | - | 19 |
| Antioxidant 1 | | 3 | 3 | 3 | 3 | 3 | 3 | 3 | 3 | 3.5 | 3 |
| Antioxidant 2 | | 1 | 1 | 1 | 1 | 1 | 1 | 1 | 1 | 1 | 1 |
| Zinc oxide | | 2 | 2 | 2 | 2 | 2 | 2 | 2 | 2 | 2 | 2 |
| Sulfur | | 1.50 | 1.50 | 1.50 | 1.50 | 1.50 | 1.50 | 1.50 | 1.50 | 1.50 | 1.50 |
| Vulcanization accelerator 1 | | 1.3 | 1.3 | 1.3 | 1.3 | 1.3 | 1.3 | 1.3 | 1.3 | 1.3 | 1.3 |
| Vulcanization accelerator 2 | | 2.5 | 2.5 | 2.5 | 2.5 | 2.5 | 2.5 | 2.5 | 2.5 | 2.5 | 2.5 |
| Mold releasability | | 100 | 105 | 102 | 125 | 128 | 130 | 110 | 105 | 90 | 102 |
| Initial wet grip performance | | 100 | 96 | 80 | 95 | 90 | 82 | 78 | 105 | 90 | 98 |
| Whitening | | 100 | 100 | 100 | 90 | 90 | 100 | 100 | 100 | 100 | 100 |

As shown in Tables 1 and 2, the rubber compositions according to Examples of the present invention have good releasability from a mold or the like, and tires obtained from the rubber compositions according to Examples are excellent in initial wet grip performance and a rubber surface was hardly subject to whitening even after the tires were allowed to stand at a room temperature.

## Claims

1. A rubber composition for an external layer of a tire comprising
a rubber component and
0.5 to 2.0 parts by mass of a branched alkane having 40 to 70 carbon atoms,
1.2 parts by mass or less and not less than 0.05 part by mass of a linear alkane having 45 or more carbon atoms,
0.1 to 100 parts by mass of a hydrocarbon resin having a weight-average molecular weight of 300 to 15,000 based on 100 parts by mass of the rubber component, and
further comprising 1.2 parts by mass or less and not less than 0.05 part by mass of a linear alkane having 20 to 32 carbon atoms based on 100 parts by mass of the rubber component.

2. The rubber composition of claim 1, wherein
the hydrocarbon resin has a softening point of 160°C or lower, and
is contained in an amount of 1.0 part by mass or more based on 100 parts by mass of the rubber component.

## Patentansprüche

1. Kautschukzusammensetzung für eine äußere Schicht eines Reifens, umfassend
eine Kautschukkomponente und
0,5 bis 2,0 Massenteile eines verzweigten Alkans mit 40 bis 70 Kohlenstoffatomen,
1,2 Massenteile oder weniger und nicht weniger als 0,05 Massenteile eines linearen Alkans mit 45 oder mehr Kohlenstoffatomen,
0,1 bis 100 Massenteile eines Kohlenwasserstoffharzes mit einem gewichtsmittleren Molekulargewicht von 300 bis 15000, bezogen auf 100 Massenteile der Kautschukkomponente, und
zudem umfassend 1,2 Massenteile oder weniger und nicht weniger als 0,05 Massenteile eines linearen Alkans mit 20 bis 32 Kohlenstoffatomen, bezogen auf 100 Massenteile der Kautschukkom ponente.

2. Kautschukzusammensetzung nach Anspruch 1, wobei das Kohlenwasserstoffharz einen Erweichungspunkt von 160°C oder niedriger aufweist, und in einer Menge von 1,0 Massenteilen oder mehr enthalten ist, bezogen auf 100 Massenteile der Kautschukkomponente.

## Revendications

1. Composition de caoutchouc pour couche externe d'un pneumatique comprenant
un composant de caoutchouc et
0,5 à 2,0 parties en masse d'un alcane ramifié ayant 40 à 70 atomes de carbone,
1,2 parties en masse ou moins et pas moins de 0,05 partie en masse d'un alcane linéaire ayant 45 atomes de carbone ou plus,
0,1 à 100 parties en masse d'une résine hydrocarbure ayant un poids moléculaire moyen en poids de 300 à 15 000 sur la base de 100 parties en masse du composant de caoutchouc, et
comprenant en outre 1,2 parties en masse ou moins et pas moins de de 0,05 partie en masse d'un alcane linéaire ayant 20 à 32 atomes de carbone sur la base de 100 parties en masse du composant de caoutchouc.

2. Composition de caoutchouc selon la revendication 1, dans laquelle
la résine hydrocarbure a un point de ramollissement de 160 °C ou moins et est contenue en une quantité de 1,0 partie en masse ou plus sur la base de 100 parties en masse du composant de caoutchouc.
